# EUROPEAN PATENT APPLICATION

(11) **EP 2 199 992 A1**
(43) Date of publication of application: **23.06.2010**
(21) Application number: 08172479.1
(22) Date of filing: 19.12.2008
(51) Int. Cl.: G07F 7/10

(54) **Secure activation before contactless banking smart card transaction**

(71) Applicant: Gemalto SA, 92190 Meudon (FR)
(72) Inventor: Grellier, Stéphane, 92190 Meudon (FR)

(57) **Abstract**

The invention relates to a portable token equipped with non-volatile memory, the token comprising authentication means to authenticate a holder of the token, authorization means to define the rights of the holder, and payment means to trigger a payment transaction. The authorization means are set to store the rights in non-volatile memory after the authentication means are invoked, and the payment means have the capacity to retrieve the rights from non-volatile memory, and to subject the execution of the payment transaction to the verification of the rights.

The invention also relates to a related portable device, to a system comprising a portable token and a portable token, and to a method for carrying out a payment transaction with a portable token.

## Description

The invention relates to portable tokens such as smart cards, used for carrying out payment transactions.

A portable token considered in the context of the invention is an electronic device, which is light and small in order to be easily carried by a user (fits easily in a pocket). It is most often personal. In general, a portable token is a resource constrained device, in that at least one (if not all) of the following is true: it has a processor but the processor is not very powerful, it has little memory, it does not have a source of power (battery etc.), or it does not have a user interface. In order to interact with a portable token, a user typically needs to connect the portable token with a terminal, either in contact or in contact-less mode, and the terminal typically provides some power as well as means to exchange data with the portable token and/or to communicate with the user. With a proper terminal, the portable token can communicate data to the user (e.g. with an output device such as a sound card, an LED, a buzzer or a vibrator embedded in the terminal) and conversely the user can input data (e.g. PIN code, passwords, etc.) into the portable token (e.g. via an input device of the terminal, such as a pinpad, a keyboard, a microphone or a touch screen). More elaborate portable tokens may embed a battery, and/or have input/output capabilities such as a small pinpad, or a small LCD.

The most widespread example of portable token is probably the smart card. Billions of smart cards are used in the world, and allow cardholders (people carrying the smart card) to authenticate themselves e.g. to a financial institution (e.g. when making payment with a bank card), to a telecom operator (e.g. when passing phone calls with a GSM phone equipped with a SIM card), or to a government organization (e.g. when authenticating with a healthcare smart card, ID smart card, or electronic passport). Many other types of portable tokens exist, for example USB keys, parallel port dongles, OTP tokens (OTP stands for One Time Password), TPMs (trusted platform modules, specified by the Trusted Computing Group, and which typically allow to secure a computing device by verifying in particular that the hardware components are not modified, and that any software it runs has the good version and has been properly signed), etc.

The invention relates more specifically to portable tokens for carrying out payment transactions. Such tokens include in particular contact and contact-less banking cards. Such banking cards typically comply with numerous standards. In addition to the usual ISO 7816 series of standards, and possibly to the JavaCard standard, such tokens typically comply with standards specific to the finance industry, such as EMV.

A payment transaction typically involves four entities:
- the person (typically a cardholder) willing to carry out the transaction using the portable token (typically a banking card); it could be for example a person willing to buy a piece of furniture.
- a merchant (e.g. a store selling furniture)
- an issuer (typically the bank of the cardholder)
- an acquirer (typically the bank of the merchant)

The issuer typically has a network of terminals. Such terminals may include ATMs (automatic teller machines) allowing cardholders to withdraw cash with their card. The issuer can also be an acquirer, in which case his terminals may include POS terminals (point of sale terminals) which merchants use for credit cards payments.

In general, when a cardholder goes to a merchant, the issuer and the acquirer are not the same. In simpler terms, the bank of the cardholder is typically different from the bank of the merchant (but not always).

As well known in the art and explained in particular in Wikipedia, an online encyclopedia, a credit card system is a type of transaction settlement and credit system, named after the small plastic card issued to users of the system (referred to as cardholders or more generally holders of a portable token). A credit card is different from a debit card in that the credit card issuer lends the consumer money rather than having the money removed from an account. It is also different from a charge card (though this name is sometimes used by the public to describe credit cards) in that charge cards require that the balance be paid in full each month. In contrast, a credit card allows the consumer to 'revolve' their balance, at the cost of having interest charged. Most credit cards are the same shape and size, as specified by the ISO 7810 standard. However, alternative shapes exist. All examples above (credit card, charge card, debit card, etc.) are examples of portable tokens allowing to carry out a payment transaction. In certain countries (e.g. France) the term credit card is often used to refer to any banking card (it's an abuse of the language).

Typically, a user is issued a credit card after an account has been approved by the credit provider (often a general bank, but sometimes a captive bank created to issue a particular brand of credit card). The cardholder can make purchases from merchants accepting that credit card up to a pre-established credit limit. When a purchase is made, the cardholder agrees to pay the card issuer. The cardholder may indicate his/her consent to pay in multiple ways, such as by signing a receipt with a record of the card details and indicating the amount to be paid, by giving verbal authorizations via telephone and electronic authorization using the Internet, etc. A credit card may serve as a form of revolving credit, or the cardholder may choose to apply any payments toward recent rather than previous debt.

Some credit cards can also be used in an ATM to withdraw money up to the credit limit extended to the card but many card issuers charge interest on cash advances before they do so on purchases. The interest on cash advances is commonly charged from the date the withdrawal is made, rather than the monthly billing date. Many card issuers levy a commission for cash withdrawals, even if the ATM belongs to the same bank as the card issuer.

It has become more and more common in the recent years to switch from contact to contact-less communications, in many field of technology, and more specifically in the field of portable tokens. Contact-less technologies are typically more convenient (easier and faster to use by end users). In particular, it has been proposed to embed an antenna in cell phones, and to connect the SIM card to the antenna. The SIM card can therefore establish NFC communications with an NFC reader, for example in transport applications, the user can simply bring his cell phone close to the gate at the entry of a metro station, and open it this way instead of having to insert a ticket.

Payment transactions with portable tokens should be as fast as possible in order to maximize convenience for the user. Therefore contact-less banking card are more and more widespread.

On the other hand, payment transactions should be secure, for example a thief stealing a portable token should not be able to carry out important payment transactions with it. One way to secure a transaction is to authenticate the holder of the portable token, and to verify that he is authorized to carry out the payment transaction. In certain countries, this is still done by signing a receipt, but more and more cryptographic techniques are used, as they are considered harder to forge.

The two requirements above (security and speed) are conflicting (securing the transaction implies adding verifications, which slows down the transaction). For this reason, it has been proposed to apply the usual verifications when the payment transaction is important, and for small transactions, to skip the verifications. Unfortunately, with such system, a thief could carry out plenty of small transactions, which would result in the same loss as one important transaction.

It is an object of the invention to propose a solution which is more secure, while convenient.

According to a preferred embodiment of the invention, a portable token is equipped with non-volatile memory (e.g. Flash, EEPROM, etc.).

The token comprises authentication means to authenticate a holder of the token, for example the token may store a PIN code and request the holder to type the PIN, if the PIN matches the stored value, the holder is authenticated. It is possible to block the PIN code (in a known manner), after a predefined number of wrong attempts has taken place. It is possible to implement different authentication mechanisms, such as biometrics, for example fingerprint recognition, preferably by carrying out the comparison within the portable token (e.g. with "match-on-card" technology). It is also possible to combine several technologies (e.g. require both PIN and fingerprint in order to authenticate a user), or to allow different possibilities of authentication.

The portable token additionally comprises authorization means to define the rights of the holder. For example, the authorization may be implemented via access conditions rules. Each resource in the portable token (e.g. file, applications, directory, cryptographic keys, etc.) can be associated with an access condition list specifying which entity can carry out which operation. For example, for a given file, it may be specified that nobody can write anything in the file, and that only certain users (authenticated with the authentication means) can read it. For another file, it can be specified that only the administrator (e.g. a financial institution issuing the portable token) can create it or delete it, while both the administrator and the holder of the portable token can read it and write to it. For each resource (e.g. file), and for each operation (e.g. read operation) which can be carried out on said resource, the holder is either authorized or not authorized to carry out said operation with said resource. Certain resources can be always accessible to anybody (e.g. when not security sensitive) and for such resources the implementation can be simplified by not carrying out any verification.

The portable token also comprises payment means to trigger a payment transaction. For example, the portable token can be a smart card, and it can comprise, in a known manner, an electronic purse applet, or it can be a debit or credit card with which it is possible to carry out payment transactions (e.g. buy goods on the Internet or in a shop, etc.), or a frequent flyer card with which one can obtain a plane ticket using air miles, etc.

The authorization means are set to store the rights in non-volatile memory after the authentication means are invoked (e.g. each time a user successfully submits his PIN code, this fact is recorded in non-volatile memory, i.e. the portable token can check from the non-volatile memory whether the user is or not authenticated and accordingly what his rights are). In preferred embodiments the portable token is personal (only one holder), and storing the rights can simply consist in memorizing the fact that the holder has been properly authenticated; from pre-stored access condition rules it is then possible to know which operations are allowed and which are not. This is different from state of the art portable tokens which check the rights in RAM and do not have the ability to recover the rights after the portable token has been powered down (since the RAM is erased). Power down typically occurs as soon as the portable token (e.g. a regular smart card) is removed from the terminal slot, or leaves the electromagnetic field of the contact-less reader (e.g. for a contact-less smart card).

The payment means have the capacity to retrieve the rights from non-volatile memory, and to subject the execution of the payment transaction to the verification of the rights. This is advantageous, since even after a power down operation, the rights are maintained, which renders the next use of the portable token quicker (no need to re-authenticate). The user can therefore authenticate in advance (e.g. when waiting for his turn in a supermarket, by connecting to his portable token e.g. with his cell phone, as described more in details below). When the user has finished queuing and reached the desk, he can pay very quickly (no need to type his PIN code, etc.) which speeds up the queue. In preferred embodiment, as soon as he has left the desk, he can de-authenticate (e.g. by connecting his portable token again with his cell phone and having the cell phone send appropriate commands to the portable token), or the terminal (at the desk of the supermarket in the above example) can automatically de-authenticate the user after the payment transaction. In this preferred embodiment, the portable token is therefore instructed to erase the rights from non-volatile memory just after the payment transaction, which prevents a thief from using the portable token for another transaction after the intended transaction has taken place.

In another preferred embodiment, it is the portable token itself which comprises right update means to modify the rights, according to a right policy, each time the payment means are invoked. This is more secure, since it does not rely on the user or on any third party.

The right update means may be set to disable the rights after they have been used. Therefore a thief will not be able to carry out an additional transaction, even if the user has not manually de-authenticated and if the terminal has not de-authenticated either, since the authentication is carried out automatically with the right update means.

Alternatively, the rights can comprise a counter defining the number of payment transactions that can be carried out without re-authenticating the holder of the token. The authorization means can be set to initialize the counter with a maximum value when the authentication means are successfully invoked (e.g. each time the holder successfully presents his PIN code), and the right update means can be set to decrement the counter, the rights being disabled when the counter reaches zero. For example it the maximum value is equal to three, each time the user authenticates, he has the possibility to carry out three payment transactions without having to authenticate again, even if the portable token is disconnected and powered down between said payment transactions. It is possible to decrement the counter irrespective of whether the portable token has been disconnected or not, but in an alternative embodiment it is possible to decrement it only if the portable has been disconnected, i.e. the user would be allowed three sessions (a session ending when the portable token is powered down), and within each session he could carry out as many payment transactions as he wants. This alternative embodiment is typically less secure (but can sometimes be more convenient), in general the previous embodiment should be preferred, for security reasons.

In preferred embodiments the payment means are set to assess the importance of the payment transaction requested, and to require the authentication means to be invoked when it is determined that the importance of the payment transaction exceeds a predefined threshold, irrespective of the contents of the rights stored in the non-volatile memory. The assessment of payment transaction importance may comprise comparing the amount of the transaction (e.g. in dollars, in air-miles, etc.) with a predefined threshold. If the transaction exceeds the threshold, then it is considered important. It can also comprise identifying the other party of the transaction or the type of transaction. For example, the above threshold can be different for a cash withdrawal, for a credit operation, or for a debit operation. It is possible to define and store in the portable token a list of providers (shops, restaurants, etc.) for which no threshold should be applied, or on the contrary for which authentication should always be requested irrespective of the amount of the transaction, or for which a specific threshold should apply. This can be done by the issuer of the portable token, by the holder himself, or by both, depending on the security policy of the issuer.

With this preferred embodiment, for important transactions the portable token behaves as state of the art portable tokens, while for "small" transactions (transactions not classified as important), the payment transaction means simply read the rights from non-volatile memory, and if the rights allow the transaction, the transaction is carried out quicker (no need to carry out the authentication, etc.).

In a preferred embodiment, the portable token comprises a contact-less interface (e.g. the portable token can be a contact-less smart card), and the payment means are set to carry out the payment transaction through the contact-less interface. This is particularly advantageous because contact-less devices allow very quick transactions (simply need to bring the portable token close to a contact-less terminal, instead of being handed a reader and having to insert the token in a slot of the reader or to otherwise connect it to the reader). This allows very quick transactions, especially small transactions (such as buying metro tickets in a train station or purchasing some bread in a bakery). Of course the security is slightly lowered, but the transaction being small the risk is small too.

The invention also relates to a system comprising a portable token as described above and a portable device, wherein the portable device comprises means to communicate with the portable token (e.g. USB connector, firewire connector, serial connector, Bluetooth link, WiFi, etc.), and a user interface to enable the holder of the portable token to supply authentication information to the authentication means of the portable token, thereby authenticating the holder. For example, the portable token may embed a small web server, and the portable device may embed a web browser allowing the holder to navigate through the web server. The web server may store html pages prompting the user to type his PIN code, or to put his finger on a fingereprint sensor, etc. It is also possible to use proprietary interfaces wherein the portable device prompts the user for a PIN code in a specific window, or in command line prompt.

The invention also relates to a portable device, in particular a portable device suitable for the above system. The portable device comprises means to communicate with a portable token according to the embodiments wherein the portable token comprises right update means. As stated above, the communication means could comprise a USB connector, a firewire connector, a serial connector, a Bluetooth link, WiFi, etc. The portable device also comprises a user interface (e.g. web browser, or proprietary interface, as explained above) to enable the holder of the portable token to supply authentication information to the authentication means of the portable token, thereby authenticating the holder. The user interface is further set to enable the holder of the portable token to customize the rights policy. For example, when the rights comprise a counter defining the number of transactions, the holder can connect to the portable token, authenticate himself, and specify that he does not want to authenticate for the next three transactions (or in preferred embodiment for the next three transactions that are not classified as important). This would then set the counter to the specified maximum value, i.e. the rights would be updated in non-volatile memory accordingly. In preferred embodiments, the user can also edit the information defining the importance of the transactions (threshold(s), type of transactions, parties with which the transactions are carried out, etc.).

In preferred embodiments, the portable device comprises a contact-less interface in order to communicate with a portable token comprising a contact-less interface. In particular, the portable device can be a mobile phone with NFC capability, and the portable token can be an NFC smart card.

The invention also relates to a method for allowing a holder of a portable token to carry out a payment transaction. In a first phase, the holder authenticates to the portable token (e.g. by typing his PIN code), then the rights of the holder are defined (e.g. based on access condition lists associated with the holder), and the rights (or at least the minimum information needed to reconstruct the rights) are stored in a non-volatile memory of the portable token (typically EEPROM or Flash). This can be done in advance of a payment transaction, either once for all (until the user de-authenticates himself or is de-authenticated by another entity), or once for a number of payment transactions. In a subsequent phase (typically when a payment transaction is about to take place), the rights are retrieved from non-volatile memory (in certain embodiments, only some information sufficient to reconstruct the rights is retrieved and the relevant rights are reconstructed; this is also referred to as "retrieving the rights from non-volatile memory" as ultimately it is what is done), and the execution of the payment transaction is subjected to the successful verification of the rights.

The preferred embodiments and variants described above in relation to any one of the following four objects: {portable token, system, portable device, method}, apply equally to the other three objects.

## Claims

1. Portable token equipped with non-volatile memory, the token comprising:
• authentication means to authenticate a holder of the token,
• authorization means to define the rights of the holder, and
• payment means to trigger a payment transaction,
**characterized in that:**
• the authorization means are set to store the rights in non-volatile memory after the authentication means are invoked, and
• the payment means have the capacity to retrieve the rights from non-volatile memory, and to subject the execution of the payment transaction to the verification of the rights.

2. Portable token according to claim 1, comprising right update means to modify the rights, according to a right policy, each time the payment means are invoked.

3. Portable token according to claim 2, wherein the right update means are set to disable the rights after they have been used.

4. Portable token according to claim 2, wherein
• the rights comprise a counter defining the number of payment transactions that can be carried out without re-authenticating the holder of the token,
• the authorization means are set to initialize the counter with a maximum value when the authentication means are successfully invoked, and
• the right update means are set to decrement the counter, the rights being disabled when the counter reaches zero.

5. Portable token according to any previous claim, wherein the payment means are set:
• to assess the importance of the payment transaction requested, and
• to require the authentication means to be invoked when it is determined that the importance of the payment transaction exceeds a predefined threshold, irrespective of the contents of the rights stored in the non-volatile memory.

6. Portable token according to any previous claim, comprising a contact-less interface, wherein the payment means are set to carry out the payment transaction through the contact-less interface.

7. System comprising a portable token according to any previous claim and a portable device, wherein the portable device comprises
• means to communicate with the portable token, and
• a user interface to enable the holder of the portable token to supply authentication information to the authentication means of the portable token, thereby authenticating the holder.

8. Portable device comprising:
• means to communicate with a portable token according to claim 2 or to any of its dependent claims, and
• a user interface to enable the holder of the portable token to supply authentication information to the authentication means of the portable token, thereby authenticating the holder,
the user interface being further set to enable the holder of the portable token to customize the rights policy.

9. Portable device according to claim 8, wherein customizing the rights policy comprises defining the maximum value of the counter of a portable token according to claim 4 or to any of its dependent claims.

10. Portable device according to claim 9, comprising a contact-less interface in order to communicate with a portable token according to claim 6.

11. Portable device according to any of claims 8 to 10, wherein the portable device is a mobile phone.

12. Method for allowing a holder of a portable token to carry out a payment transaction, wherein the method comprises, in a first phase,
• authenticating the holder to the portable token,
• defining, in the portable token, the rights of the holder, and
• storing the rights in a non-volatile memory of the portable token, and, in a subsequent phase,
• retrieving the rights from non-volatile memory, and
• subjecting the execution of the payment transaction to the successful verification of the rights.
